# EUROPEAN PATENT SPECIFICATION

(11) **EP 2 088 782 B1**
(45) Date of publication and mention of the grant of the patent: **04.05.2011**
(21) Application number: 08700684.7
(22) Date of filing: 18.01.2008
(51) Int. Cl.: H04N 7/26, H04N 7/50

(54) **A METHOD AND A DEVICE FOR TRANSCODING VIDEO**
VERFAHREN UND VORRICHTUNG ZUR VIDEOTRANSKODIERUNG
PROCÉDÉ ET DISPOSITIF PERMETTANT DE TRANSCODER UNE VIDÉO

(30) Priority: 19.01.2007 CN 200710001164
(43) Date of publication of application: 12.08.2009
(73) Proprietor: Huawei Technologies Co., Ltd., Longgang District, Shenzhen Guangdong 518129 (CN)
(72) Inventor: FAN, Gaosheng, Shenzhen, Guangdong 518129 (CN); YAN, Jun, Shenzhen, Guangdong 518129 (CN)
(74) Representative: Gulde Hengelhaupt Ziebig & Schneider
(86) International application number: PCT/CN2008/000135
(87) International publication number: WO 2008/089661

(56) References cited:
- WO-A1-01/80571
- CN-A- 1 339 922
- CN-A- 1 366 779
- CN-A- 1 691 779
- CN-A- 101 001 371
- JP-A- 2006 270 590
- US-A1- 2007 116 116
- US-B1- 6 215 824
- US-B1- 6 441 754
- US-B1- 6 522 693
- JUN XIN ET AL: "Motion and Mode Mapping for MPEG-2 to H.264/AVC Transcoding" MULTIMEDIA AND EXPO, 2006 IEEE INTERNATIONAL CONFERENCE ON, IEEE, PI, 1 July 2006 (2006-07-01), pages 313-316, XP031032835 ISBN: 978-1-4244-0366-0

## Description

### Field of the Invention

The present invention relates to the computer and communication fields, and in particular, to a method and apparatus for video transcoding.

### Background of the Invention

At present, video coding and decoding technologies are widely applied to digital TV, videoconferencing, and Internet video transmission. Different application fields have different requirements for video coders, video decoders, video data storage formats, and network transmission devices. Thus, different coding and decoding standards are formulated. For example, the MPEG-2 codec standard is oriented to digital TV; the H.263 and H.264 codec standards are oriented to videoconferencing; and the MPEG-4 standard (a super low bit rate codec standard) is oriented to mobile multimedia applications.

To support seamless connection between heterogeneous networks, access devices, and multimedia data formats, the prior art uses a video transcoding technology. The video transcoding technology is used to decode compressed video streams (one or more encoded data streams), zoom in/out, edit, or combine decoded images, encode the processed images for the second time, and then output the images. The video transcoding technology is widely applied. For example, in a video on demand (VOD) system, people can request VOD services in wireless mode after installing a transcoder on the VOD server. In a video surveillance system, remote surveillance can be implemented through the Internet after the data of scenes is processed by the transcoder. In a videoconferencing system, a multi-point control unit performs transcoding to combine images and convert protocol/image formats. In the digital TV broadcast field, to ensure that any multimedia terminal can receive digital broadcast signals, a device similar to a set top box (STB) or media gateway performs transcoding on relevant data such as the bit rate and the resolution.

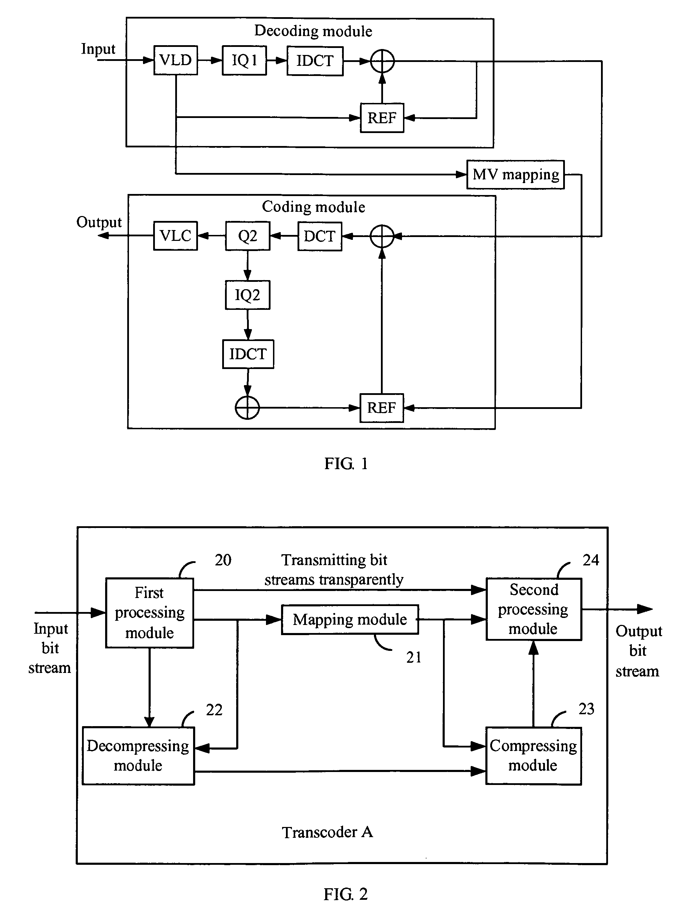

Prior transcoders are classified into three types: open-loop transcoder, cascade pixel domain transcoder, and discrete cosine transform transcoder. The following takes the cascade pixel domain transcoder as an example. As shown in FIG. 1, the cascade pixel domain transcoder includes a decoding module, a motion vector (MV) mapping module, and a coding module. When a compressed bit stream is input, the transcoder transcodes it as follows:

Step 100: The transcoder performs variable length decoding (VLD) on the compressed bit stream.

The compressed bit stream includes a key video frame (I frame) and predictive video frames (P frame and B frame). The I frame stores complete video data of an image. The P and B frames are used to adjust the corresponding I frame to obtain new images.

For convenient transmission, the video data in the I frame is divided into several unit image blocks and each block is called an I block. Each I block contains corresponding macroblock information that is used to record the macroblock type, macroblock identifier, and macroblock size for the I block. In the same way, the video data in the P or B frame is also divided into several unit image blocks and each block is called a P or B block. Each P or B block contains corresponding macroblock information that is used to record the macroblock type, macroblock identifier, macroblock size, MV, and quantitative information for the P or B block. In addition, the P or B frame may contain the I block to carry corresponding video data. A unit image block can be divided as required, which is not restricted by the division position or size.

Step 101: The transcoder performs inverse quantization (IQ1) and inverse discrete cosine transform (IDCT) on the I, P, and B blocks in the decoded bit stream, performs motion compensation on the corresponding P and B blocks according to the MVs obtained from the P and B blocks, and then generates a complete video data stream according to the corresponding I block. This process is also called decompression.

Step 102: The transcoder maps the MVs obtained from the P and B blocks according to the target compression protocol, that is, performs MV mapping. MV mapping is to modify an original MV to a target MV defined in the target compression protocol.

Step 103: The transcoder performs DCT and quantization (Q2) on the complete video data stream according to the target compression protocol. Then the transcoder backs up the P and B blocks, performs IQ2 and IDCT on the P and B blocks backed up, and then combines the corresponding MVs of the P and B blocks to perform motion compensation on the subsequent video data stream. This process is also called compression.

Step 104: The transcoder performs variable length coding (VLC) on the compressed bit stream including the I, P, and B blocks, generates a corresponding output bit stream, and then outputs the bit stream.

In the preceding process, when obtaining MVs of unit image blocks and performing MV mapping, the transcoder needs to perform huge calculation. In certain scenarios, the calculation workload in this step even occupies over 50% of the calculation workload of the entire process, which affects real-time image transmission. Therefore, a research on image coding is to decrease the calculation workload of obtaining target MVs to ensure real-time image transmission.

In addition, in the prior art, certain coding and decoding protocols already add the predictive mode information of the I block to compress the video data contained in the I block, which greatly increases the compression rate of video data. When processing the input bit streams that contain predictive mode information, however, the prior transcoder cannot reuse the predictive mode information in the bit streams. This wastes information and increases the calculation workload, thus affecting the transcoding efficiency of the transcoder.
US 6441754 B1 discloses a transcoding architecture and a consumer set-top box with storage capability that is based on the transcoding architecture and capable of operating efficiently in an all-digital environment. The transcoder architecture for processing a compressed source bit stream into a second bits tream having a determinable bit rate or quality. D1 also reveals a strategy for compressing macroblock (MB) in columns 13-14, and the resulting number of compressed bits for a given MB is largely determined by quantization parameter.In some situations, the corresponding compressed bits for the MB can be copied into the new compressed bit stream or "re-encoded bit stream".
"Motion and Mode Mapping for MPEG-2 toH.264/AVC Transcoding" (MULTIMEDIA and EXPO, 2006 IEEE INTERNATIONAL CONFRENCE ON, IEEE, PI,1 July 2006) discloses transcoding technique for an efficient MPEG-2 to H.264/AVC transcoder. The proposed transcoder incorporates simple mode and motion mapping algorithms for MEPG-2 to H.264/AVC baseline profile video transcoding.
WO 01/80571 A1 relates to a method for controlling a set of transcoding channels which yields a better bit rate allocation to the different transcoding channels and a better distribution of the visual quality of the transcoded programs.

### Summary of the Invention

Embodiments of the present disclosure provide a method and apparatus for video transcoding to avoid a problem in the prior art that images cannot be transmitted in real time due to huge calculation workload when a transcoder performs transcoding.

Embodiments of the present invention provide the following technical solution:
A method for transcoding video data includes:
   performing variable length decoding on an input bit stream; and determining a bit stream part that can be transmitted transparently without being decompressed and re-compressed and a bit stream part that cannot be transmitted transparently in the decoded bit stream;
   decompressing the bit stream part that cannot be transmitted transparently according to an original compression protocol and compressing the decompressed bit stream according to a target compression protocol;
   combining the bit stream part that can be transmitted transparently and the compressed bit stream part that cannot be transmitted transparently and performing variable length coding on the combined bit stream to generate an output bit stream;
   wherein the process of determining a bit stream part that can be transmitted transparently without being decompressed and re-compressed and a bit stream part that cannot be transmitted transparently in the decoded bit stream further comprises:
      determining whether the original compression protocol and the target compression protocol are the same compression protocol;
      if the original compression protocol is the same as the target compression protocol, determining the bit stream part that contains unit image blocks whose bit rates are less than a threshold as the bit stream part that can be transmitted transparently and determining the bit stream part that contains unit image blocks whose bit rates are not less than the threshold as the bit stream part that cannot be transmitted transparently;
         or
      if the original compression protocol is different from the target compression protocol, determining whether the compression efficiency of the original compression protocol is lower than that of the target compression protocol, and if the compression efficiency of the original compression protocol is lower than that of the target compression protocol, calculating a ratio of the bit rate of each unit image block to a target bit rate, determining the bit stream part that contains unit image blocks whose ratios are less than a threshold as the bit stream part that can be transmitted transparently, and determining the bit stream part that contains unit image blocks whose ratios are not less than the threshold as the bit stream part that cannot be transmitted transparently.

A transcoder includes:
a module for decoding an input bit stream;
a module for determining a bit stream part that can be transmitted transparently without being decompressed and re-compressed and a bit stream part that cannot be transmitted transparently in a decoded bit stream;
a module for decompressing the bit stream part that cannot be transmitted transparently according to an original compression protocol;
a module for compressing the decompressed bit stream according to a target compression protocol;
a module for combining the bit stream part that can be transmitted transparently and the compressed bit stream part that cannot be transmitted transparently; and
a module for encoding the combined bit stream to generate an output bit stream;
wherein:
   after performing variable length decoding on the input bit stream, the transcoder further determines whether the original compression protocol of the bit stream is the same as the target compression protocol of the bit stream;
   if the original compression protocol is the same as the target compression protocol, the transcoder determines the bit stream part that contains unit image blocks whose bit rates are less than a threshold as the bit stream part that can be transmitted transparently and determines the bit stream part that contains unit image blocks whose bit rates are not less than the threshold as the bit stream part that cannot be transmitted transparently; and

if the original compression protocol is different from the target compression protocol, the transcoder further determines whether the compression efficiency of the original compression protocol is lower than that of the target compression protocol, and if the compression efficiency of the original compression protocol is lower than that of the target compression protocol, the transcoder calculates a ratio of the bit rate of each unit image block to a target bit rate, determines the bit stream part that contains unit image blocks whose ratios are less than a threshold as the bit stream part that can be transmitted transparently and determines the bit stream part that contains unit image blocks whose ratios are not less than the threshold as the bit stream part that cannot be transmitted transparently.

In some embodiments of the present invention, the transcoder transcodes one or more input bit streams by transparently transmitting a part of the input bit streams. This greatly decreases the calculation workload of the transcoder under specified conditions and ensures real-time image transmission. In addition, embodiments of the present invention transcode the input bit streams that contain predictive mode information, thus greatly decreasing the calculation workload of the transcoder and improving the working efficiency of the transcoder.

### Brief Description of the Drawings

FIG. 1 shows a functional structure of a transcoder in the prior art;

FIG. 2 shows a functional structure of a first transcoder in an embodiment of the present invention;

FIG. 3 shows a flowchart of a first method for a transcoder to transcode video data in an embodiment of the present invention;

FIG. 4 shows a flowchart of a second method for a transcoder to transcode video data in an embodiment of the present invention; and

FIG. 5 shows a functional structure of a second transcoder in an embodiment of the present invention.

### Detailed Description of the Invention

Embodiments of the present invention transcode one or more input bit streams Sins by transparently transmitting a part of the bit streams. In addition, if a unit image block in an input bit stream contains predictive mode information, the transcoder obtains and maps the predictive mode information to transcode the input bit stream.

The present embodiments are hereafter described in detail with reference to exemplary embodiments and accompanying drawings.

As shown in FIG. 2, transcoder A in an embodiment of the present invention includes a first processing module 20, a mapping module 21, a decompressing module 22, a compressing module 23, and a second processing module 24.

The first processing module 20 is adapted to: perform VLD on an input bit stream, determine the bit stream part that can be transmitted transparently and the bit stream part that cannot be transmitted transparently in the decoded bit stream according to the original compression protocol, target compression protocol, and relevant bit stream parameters, and obtain the predictive mode information in the I block and the MVs in the P and B blocks from the bit stream part that cannot be transmitted transparently.

The mapping module 21 is adapted to map the obtained predictive mode information in the I block and the MVs in the P and B blocks according to the target compression protocol.

The decompressing module 22 is adapted to decompress the corresponding bit stream part according to the original compression protocol and the obtained predictive mode information and MVs.

The compressing module 23 is adapted to compress the decompressed bit stream according to the target compression protocol and the mapped predictive mode information and MVs.

The second processing module 24 is adapted to: combine the bit stream part that can be transmitted transparently and the compressed bit stream part that cannot be transmitted transparently, and perform VLC on the combined bit stream to generate an output bit stream.

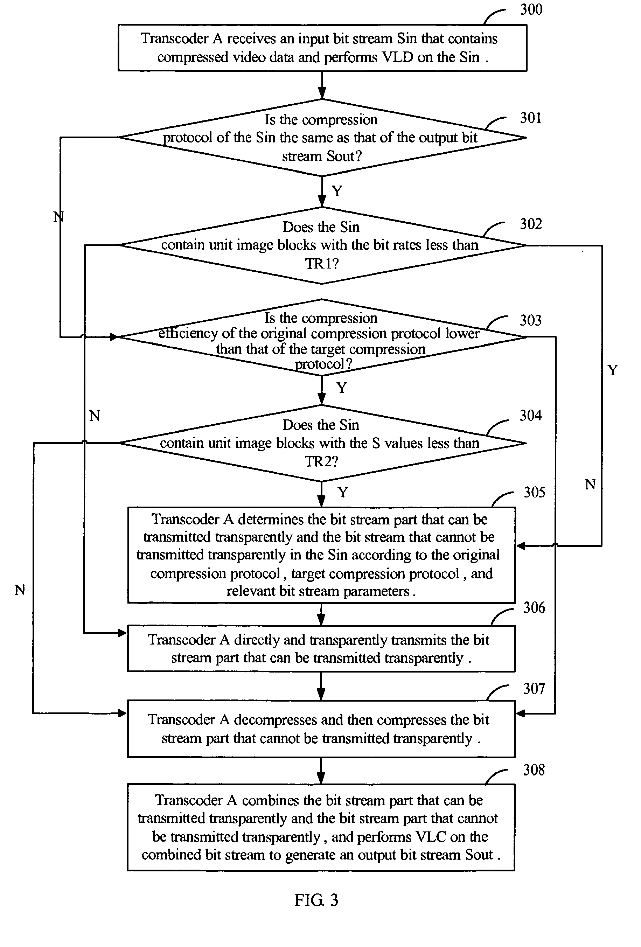

Based on the network architecture shown in FIG. 3, transcoder A in the embodiment of the present invention transcodes an input bit stream Sin by transparently transmitting a part of the bit stream. The specific steps are as follows:

Step 300: Transcoder A receives a Sin that contains compressed video data and performs VLD on the Sin.

Step 301: Transcoder A determines whether the compression protocol of the Sin (that is, the original compression protocol) is the same as that of the output bit stream Sout (that is, the target compression protocol). If yes, transcoder A proceeds to step 302; otherwise, transcoder A proceeds to step 303.

Step 302: Transcoder A further determines whether the decoded Sin contains unit image blocks (including the I, P, and B blocks) whose bit rates are less than the threshold TR1 that is set by technical engineers according to the Sout. If yes, transcoder A proceeds to step 305. Otherwise, transcoder A determines that the entire Sin cannot be transmitted transparently and proceeds to step 306.

Step 303: Transcoder A further determines whether the compression efficiency of the original compression protocol is lower than that of the target compression efficiency. If yes, transcoder A proceeds to step 304. Otherwise, transcoder A determines that the entire Sin cannot be transmitted transparently and proceeds to step 307.

Step 304: Transcoder A calculates the ratio (called S value) of the bit rate of each unit image block in the decoded Sin to the bit rate of the Sout and determines whether the S values are less than the threshold TR2 that is set by technical engineers according to experiment data. If yes, transcoder A proceeds to step 305. Otherwise, transcoder A determines that the entire Sin cannot be transmitted transparently and proceeds to step 307.

Step 305: Transcoder A determines the bit stream part that contains unit image blocks whose bit rates are less than TR1 in the decoded Sin as the bit stream part that can be transmitted transparently, or determines the bit stream part that contains unit image blocks whose S values are less than TR2 in the decoded Sin as the bit stream part that can be transmitted transparently. Meanwhile, transcoder A determines the bit stream part containing unit image blocks that fail to meet the conditions as the bit stream part that cannot be transmitted transparently.

Step 306: Transcoder A directly and transparently transmits the bit stream part that can be transmitted transparently. That is, transcoder A directly uses the bit stream part that can be transmitted transparently to generate a Sout, without decompressing and recompressing the bit stream part.

The bit stream part that can be transmitted transparently may include the I, P, and B blocks. The corresponding MVs of the P and B blocks are transparently transmitted. Therefore, the MVs can be directly used and do not need to be mapped. In the same way, if the I block contains corresponding predictive mode information, the predictive mode information can also be used directly and does not need to be mapped.

Step 307: Transcoder A obtains the bit stream part that cannot be transmitted transparently in the decoded Sin, including the I, P, and B blocks, obtains the MVs contained in the bit stream part, and then maps the MVs according to the original and target compression protocols. Meanwhile, transcoder A decompresses the corresponding P and B blocks in the bit stream part according to the original compression protocol and the obtained MVs and then compresses the decompressed P and B blocks according to the target compression protocol and the mapped MVs.

Transcoder A also needs to determine whether the I block in the bit stream part that cannot be transmitted transparently contains corresponding predictive mode information. If the I block does not contain predictive mode information, that is, the video data carried by the I block is not compressed, transcoder A directly compresses the I block according to the target compression protocol. If the I block contains the corresponding predictive mode information, transcoder A obtains the predictive mode information, maps the predictive mode information according to the target compression protocol, decompresses the I block according to the original compression protocol and the obtained predictive mode information, and compresses the decompressed I block according to the target compression protocol and the mapped predictive mode information.

Step 308: Transcoder A combines the bit stream part that is transmitted transparently and the bit stream part that is decompressed and compressed and performs VLC on the combined bit stream to generate a Sout.

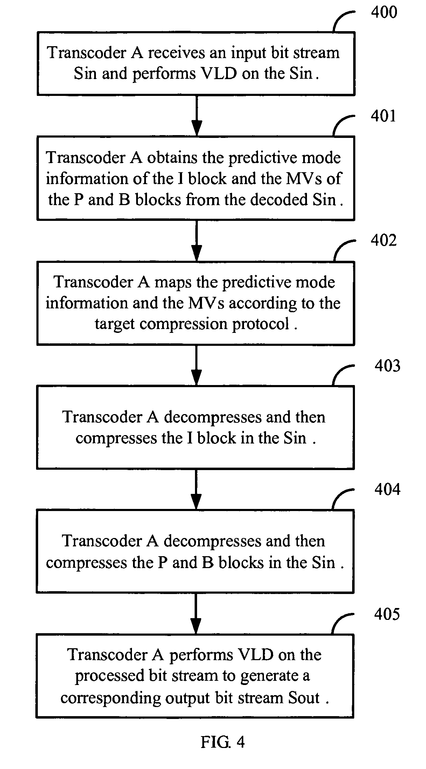

According to the preceding embodiment, in addition to transparently transmitting a part of the bit stream, transcoder A may also transcode the Sin that contains predictive mode information in another way. As shown in FIG. 4, the detailed steps for transcoder A to transcode the Sin that contains the predictive mode information of the I block are as follows:

Step 400: Transcoder A receives a Sin and performs VLD on it.

Step 401: Transcoder A obtains the predictive mode information of the I block and the MVs of the P and B blocks from the decoded Sin.

Step 402: Transcoder A maps the predictive mode information and the MVs according to a target compression protocol.

Step 403: Transcoder A decompresses the I block in the bit stream according to the original compression protocol and the obtained predictive mode information and then compresses the decompressed I block according to the target compression protocol and the mapped predictive mode information.

Step 404: Transcoder A decompresses the P and B blocks in the bit stream according to the original compression protocol and the obtained MVs and then compresses the decompressed P and B blocks according to the target compression protocol and the mapped MVs.

Step 405: Transcoder A performs VLD on the processed bit stream to generate a corresponding Sout.

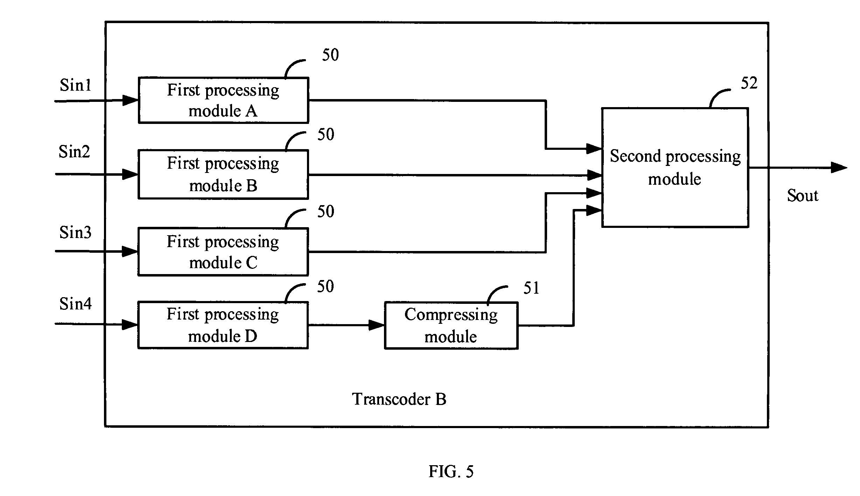

In the preceding two embodiments, transcoder A shown in FIG. 2 can transcode only separate Sins. In this embodiment, however, another transcoder B can transcode several Sins that are input at the same time. As shown in FIG. 5, transcoder B includes a first processing module 50, a compressing module 51, and a second processing module 52.

The first processing module 50 is adapted to: perform VLD on Sin1, Sin2, Sin3, and Sin4 respectively and determine the bit streams that can be transmitted transparently and the bit streams that cannot be transmitted transparently according to the bandwidth bit rate of each Sin and the bandwidth bit rate of corresponding Sout parts.

The compressing module 51 is adapted to compress the bit streams that cannot be transmitted transparently according to the bandwidth bit rate of corresponding Sout parts.

The second processing module 52 is adapted to: combine the bit streams that can be transmitted transparently and the compressed bit streams that cannot be transmitted transparently and perform VLC on the combined bit stream to generate a Sout.

In this embodiment, when receiving several Sins, transcoder B needs to classify the Sins according to a rule and then process the Sins differently according to the types, thus minimizing the calculation workload.

For example, there are four input bit streams in the CIF format: Sin1, Sin2, Sin3, and Sin4. The bandwidths of them are 512 kbps, 512 kbps, 512 kbps, and 1 Mbps respectively. The transcoder needs to present the corresponding video images of these four Sins in one picture. That is, the transcoder needs to combine the four Sins into one 4-CIF Sout with the bandwidth of 2 Mbps and the compression protocol keeps unchanged. In this case, transcoder B sets the corresponding bandwidths of the four Sins in the Sout to 512 kbps, 512 kbps, 512 kbps, and 512 kbps respectively. The specific process is as follows:

Firstly, after receiving the four Sins, transcoder B performs VLD on the four Sins respectively and then classifies the four Sins into two types according to the bandwidth of each Sin and the bandwidth of corresponding Sout parts: bit stream whose bandwidth is 512 kbps, including Sin1, Sin2, and Sin3, and bit stream whose bandwidth is not 512 kbps, including Sin4. Secondly, transcoder B transmits Sin1, Sin2, and Sin3 directly and transparently. That is, transcoder B directly reuses the information in the three bit streams to generate a Sout. Meanwhile, transcoder B decreases the rate of only Sin4 with a bandwidth of 1 Mbps. That is, transcoder B compresses Sin4 according to the bandwidth of the corresponding Sout and converts the bandwidth of Sin4 into 512 kbps. Finally, transcoder B combines Sin1, Sin2, and Sin3 that are transparently transmitted and Sin4 whose rate is decreased and performs VLC on the combined bit stream to generate a 4-CIF Sout with the bandwidth of 2 Mbps.

To sum up, embodiments of the present invention transcode one or more input bit streams by transparently transmitting a part of the input bit streams. This greatly decreases the calculation workload of the transcoder under specified conditions and ensures real-time image transmission. In addition, embodiments of the present invention transcode the input bit streams that contain predictive mode information, thus greatly decreasing the calculation workload of the transcoder and improving the working efficiency of the transcoder.

It is apparent that those skilled in the art can make various modifications and variations to the invention without departing from the scope of the invention. The present invention is intended to cover these modifications and variations provided that they fall in the scope of protection defined by the following claims.

## Claims

1. A method for transcoding video data, comprising:
performing variable length decoding on an input bit stream;
determining a bit stream part that can be transmitted transparently without being decompressed and re-compressed and a bit stream part that cannot be transmitted transparently in the decoded bit stream;
decompressing the bit stream part that cannot be transmitted transparently according to an original compression protocol and compressing the decompressed bit stream according to a target compression protocol;
combining the bit stream part that can be transmitted transparently and the compressed bit stream part that cannot be transmitted transparently and performing variable length coding on the combined bit stream to generate an output bit stream;
wherein the process of determining a bit stream part that can be transmitted transparently without being decompressed and re-compressed and a bit stream part that cannot be transmitted transparently in the decoded bit stream further comprises:
determining whether the original compression protocol and the target compression protocol are the same compression protocol;
if the original compression protocol is the same as the target compression protocol, determining the bit stream part that contains unit image blocks whose bit rates are less than a threshold as the bit stream part that can be transmitted transparently and determining the bit stream part that contains unit image blocks whose bit rates are not less than the threshold as the bit stream part that cannot be transmitted transparently; or
if the original compression protocol is different from the target compression protocol, determining whether the compression efficiency of the original compression protocol is lower than that of the target compression protocol, and if the compression efficiency of the original compression protocol is lower than that of the target compression protocol, calculating a ratio of the bit rate of each unit image block to a target bit rate, determining the bit stream part that contains unit image blocks whose ratios are less than a threshold as the bit stream part that can be transmitted transparently, and determining the bit stream part that contains unit image blocks whose ratios are not less than the threshold as the bit stream part that cannot be transmitted transparently.

2. The method of claim 1, wherein:
if an image block in a key video frame in the bit stream contains predictive mode information when processing the bit stream part that cannot be transmitted transparently, the method further comprises:
obtaining the predictive mode information; mapping the predictive mode information according to the target compression protocol; decompressing the image block in the key video frame according to the original compression protocol and the obtained predictive mode information; and compressing the decompressed image block in the key video frame according to the target compression protocol and the mapped predictive mode information.

3. A transcoder, comprising:
a module for decoding an input bit stream;
a module for determining a bit stream part that can be transmitted transparently without being decompressed and re-compressed and a bit stream part that cannot be transmitted transparently in a decoded bit stream;
a module for decompressing the bit stream part that cannot be transmitted transparently according to an original compression protocol;
a module for compressing the decompressed bit stream according to a target compression protocol;
a module for combining the bit stream part that can be transmitted transparently and the compressed bit stream part that cannot be transmitted transparently; and
a module for encoding the combined bit stream to generate an output bit stream;
wherein:
after performing variable length decoding on the input bit stream, the transcoder further determines whether the original compression protocol of the bit stream is the same as the target compression protocol of the bit stream;
if the original compression protocol is the same as the target compression protocol, the transcoder determines the bit stream part that contains unit image blocks whose bit rates are less than a threshold as the bit stream part that can be transmitted transparently and determines the bit stream part that contains unit image blocks whose bit rates are not less than the threshold as the bit stream part that cannot be transmitted transparently; and
if the original compression protocol is different from the target compression protocol, the transcoder further determines whether the compression efficiency of the original compression protocol is lower than that of the target compression protocol, and if the compression efficiency of the original compression protocol is lower than that of the target compression protocol, the transcoder calculates a ratio of the bit rate of each unit image block to a target bit rate, determines the bit stream part that contains unit image blocks whose ratios are less than a threshold as the bit stream part that can be transmitted transparently and determines the bit stream part that contains unit image blocks whose ratios are not less than the threshold as the bit stream part that cannot be transmitted transparently.

4. The transcoder of claim 3, wherein:
when processing the bit stream part that cannot be transmitted transparently, if an image block in a key video frame in the bit stream contains predictive mode information, the transcoder obtains the predictive mode information, maps the predictive mode information according to the target compression protocol, decompresses the image block in the key video frame according to the original compression protocol and the obtained predictive mode information, and compresses the decompressed image block in the key video frame according to the target compression protocol and the mapped predictive mode information.

## Patentansprüche

1. Verfahren zum Transcodieren von Videodaten, mit den folgenden Schritten:
Ausführen von Decodierung variabler Länge an einem Eingangsbitstrom;
Bestimmen eines Bitstromteils, der transparent übertragen werden kann, ohne dekomprimiert und neu komprimiert zu werden, und eines Bitstromteils, der nicht transparent in dem decodierten Bitstrom übertragen werden kann;
Dekomprimieren des Bitstromteils, der nicht transparent übertragen werden kann, gemäß einem ursprünglichen Komprimierungsprotokoll und Komprimieren des dekomprimierten Bitstroms gemäß einem Ziel-Komprimierungsprotokoll;
Kombinieren des Bitstromteils, der transparent übertragen werden kann, und des komprimierten Bitstromteils, der nicht transparent übertragen werden kann, und Ausführen von Codierung variabler Länge an dem kombinierten Bitstrom, um einen Ausgangsbitstrom zu erzeugen;
wobei der Prozess des Bestimmens eines Bitstromteils, der transparent übertragen werden kann, ohne dekomprimiert und neu komprimiert zu werden, und eines Bitstromteils, der nicht transparent in dem decodierten Bitstrom übertragen werden kann, ferner Folgendes umfasst:
Bestimmen, ob das ursprüngliche Komprimierungsprotokoll und das Ziel-Komprimierungsprotokoll dasselbe Komprimierungsprotokoll sind;
wenn das ursprüngliche Komprimierungsprotokoll dasselbe wie das Ziel-Komprimierungsprotokoll ist, Bestimmen des Bitstromteils, der Einheitsbildblöcke enthält, deren Bitraten kleiner als eine Schwelle sind, als den Bitstromteil, der transparent übertragen werden kann, und Bestimmen des Bitstromteils, der Einheitsbildblöcke enthält, deren Bitraten nicht kleiner als die Schwelle sind, als den Bitstromteil, der nicht transparent übertragen werden kann; oder
wenn das ursprüngliche Komprimierungsprotokoll von dem Ziel-Komprimierungsprotokoll verschieden ist, Bestimmen, ob der Komprimierungswirkungsgrad des ursprünglichen Komprimierungsprotokolls kleiner als der des Ziel-Komprimierungsprotokolls ist, und wenn der Komprimierungswirkungsgrad des ursprünglichen Komprimierungsprotokolls kleiner als der des Ziel-Komprimierungsprotokolls ist, Berechnen eines Verhältnisses der Bitrate jedes Einheitsbildblocks zu einer Zielbitrate, Bestimmen des Bitstromteils, der Einheitsbildblöcke enthält, deren Verhältnisse kleiner als eine Schwelle sind, als den Bitstromteil, der transparent übertragen werden kann, und Bestimmen des Bitstromteils, der Einheitsbildblöcke enthält, deren Verhältnisse nicht kleiner als die Schwelle sind, als den Bitstromteil, der nicht transparent übertragen werden kann.

2. Verfahren nach Anspruch 1, wobei,
wenn beim Verarbeiten des Bitstromteils, der nicht transparent übertragen werden kann, ein Bildblock in einem Schlüsselvideoeinzelbild in dem Bitstrom Prädiktivmodusinformationen enthält, das Verfahren ferner Folgendes umfasst:
Erhalten der Prädiktivmodusinformationen; Abbilden der Prädiktivmodusinformationen gemäß dem Ziel-Komprimierungsprotokoll; Dekomprimieren des Bildblocks in dem Schlüsselvideoeinzelbild gemäß dem ursprünglichen Komprimierungsprotokoll und den erhaltenen Prädiktivmodusinformationen; und
Komprimieren des dekomprimierten Bildblocks in dem Schlüsselvideoeinzelbild gemäß dem Ziel-Komprimierungsprotokoll und den abgebildeten Prädiktivmodusinformationen.

3. Transcodierer, umfassend:
ein Modul zum Decodieren eines Eingangsbitstroms;
ein Modul zum Bestimmen eines Bitstromteils, der transparent übertragen werden kann, ohne dekomprimiert und neu komprimiert zu werden, und eines Bitstromteils, der nicht transparent in einem decodierten Bitstrom übertragen werden kann;
ein Modul zum Dekomprimieren des Bitstromteils, der nicht transparent übertragen werden kann, gemäß einem ursprünglichen Komprimierungsprotokoll;
ein Modul zum Komprimieren des dekomprimierten Bitstroms gemäß einem Ziel-Komprimierungsprotokoll;
ein Modul zum Kombinieren des Bitstromteils, der transparent übertragen werden kann, und des komprimierten Bitstromteils, der nicht transparent übertragen werden kann; und
ein Modul zum Codieren des kombinierten Bitstroms, um einen Ausgangsbitstrom zu erzeugen;
wobei
nach dem Ausführen von Decodierung variabler Länge an dem Eingangsbitstrom der Transcodierer ferner bestimmt, ob das ursprüngliche Komprimierungsprotokoll des Bitstroms dasselbe wie das Ziel-Komprimierungsprotokoll des Bitstroms ist;
wenn das ursprüngliche Komprimierungsprotokoll dasselbe wie das Ziel-Komprimierungsprotokoll ist, der Transcodierer den Bitstromteil, der Einheitsbildblöcke enthält, deren Bitraten kleiner als eine Schwelle sind, als den Bitstromteil bestimmt, der transparent übertragen werden kann, und den Bitstromteil,
der Einheitsbildblöcke enthält, deren Bitraten nicht kleiner als die Schwelle sind, als den Bitstromteil bestimmt, der nicht transparent übertragen werden kann; und
wenn das ursprüngliche Komprimierungsprotokoll von dem Ziel-Komprimierungsprotokoll verschieden ist, der Transcodierer ferner bestimmt, ob der Komprimierungswirkungsgrad des ursprünglichen Komprimierungsprotokolls kleiner als der des Ziel-Komprimierungsprotokolls ist, und wenn der Komprimierungswirkungsgrad des ursprünglichen Komprimierungsprotokolls kleiner als der des Ziel-Komprimierungsprotokolls ist, der Transcodierer ein Verhältnis der Bitrate jedes Einheitsbildblocks zu einer Zielbitrate berechnet, den Bitstromteil, der Einheitsbildblöcke enthält, deren Verhältnisse kleiner als eine Schwelle sind, als den Bitstromteil bestimmt, der transparent übertragen werden kann, und den Bitstromteil, der Einheitsbildblöcke enthält, deren Verhältnisse nicht kleiner als die Schwelle sind, als den Bitstromteil bestimmt, der nicht transparent übertragen werden kann.

4. Transcodierer nach Anspruch 3, wobei,
wenn beim Verarbeiten des Bitstromteils, der nicht transparent übertragen werden kann, ein Bildblock in einem Schlüsselvideoeinzelbild in dem Bitstrom Prädiktivmodusinformationen enthält, der Transcodierer die Prädiktivmodusinformationen erhält, die Prädiktivmodusinformationen gemäß dem Ziel-Komprimierungsprotokoll abbildet, den Bildblock in dem Schlüsselvideoeinzelbild gemäß dem ursprünglichen Komprimierungsprotokoll und den erhaltenen Prädiktivmodusinformationen dekomprimiert und den dekomprimierten Bildblock in dem Schlüsselvideoeinzelbild gemäß dem Ziel-Komprimierungsprotokoll und den abgebildeten Prädiktivmodusinformationen komprimiert.

## Revendications

1. Procédé permettant de transcoder des données vidéo, comprenant :
l'exécution d'un décodage de longueur variable sur un flux binaire d'entrée,
la détermination d'une partie de flux binaire qui peut être transmise de manière transparente sans être décompressée et re-compressée et d'une partie de flux binaire qui ne peut pas être transmise de manière transparente dans le flux binaire décodé,
la décompression de la partie de flux binaire qui ne peut pas être transmise de manière transparente en fonction d'un protocole de compression originel, et la compression du flux binaire décompressé en fonction d'un protocole de compression cible,
la combinaison de la partie de flux binaire qui peut être transmise de manière transparente et de la partie de flux binaire compressée qui ne peut pas être transmise de manière transparente ainsi que l'exécution d'un codage de longueur variable sur le flux binaire combiné afin de générer un flux binaire de sortie,
dans lequel le traitement consistant à déterminer une partie de flux binaire qui peut être transmise de manière transparente sans être décompressée et re-compressée et
une partie de flux binaire qui ne peut pas être transmise de manière transparente dans le flux binaire décodé comprend en outre :
la détermination de ce que le protocole de compression originel et le protocole de compression cible sont le même protocole de compression ou non,
si le protocole de compression originel est identique au protocole de compression cible, la détermination de la partie de flux binaire qui contient des blocs d'image unitaire dont les débits binaires sont inférieurs à un seuil comme étant la partie de flux binaire qui peut être transmise de manière transparente, et la détermination de la partie de flux binaire qui contient des blocs d'image unitaire dont les débits binaires ne sont pas inférieurs au seuil comme étant la partie de flux binaire qui ne peut pas être transmise de manière transparente, ou
si le protocole de compression originel est différent du protocole de compression cible, la détermination de ce que le rendement de compression du protocole de compression originel est inférieur à celui du protocole de compression cible ou non,
et si le rendement de compression du protocole de compression originel est inférieur à celui du protocole de compression cible, le calcul d'un rapport du débit binaire de chaque bloc d'image unitaire sur un débit binaire cible, la détermination de la partie de flux binaire qui contient des blocs d'image unitaire dont les rapports sont inférieurs à un seuil comme étant la partie de flux binaire qui peut être transmise de manière transparente, ainsi que la détermination de la partie de flux binaire qui contient des blocs d'image unitaire dont les rapports ne sont pas inférieurs au seuil comme étant la partie de flux binaire qui ne peut pas être transmise de manière transparente.

2. Procédé selon la revendication 1, dans lequel :
si un bloc d'image dans une trame vidéo clé dans le flux binaire contient des informations de mode prédictif lors du traitement de la partie de flux binaire qui ne peut pas être transmise de manière transparente, le procédé comprend en outre :
la récupération des informations de mode prédictif, le mappage des informations de mode prédictif en fonction du protocole de compression cible, la décompression du bloc d'image dans la trame vidéo clé en fonction du protocole de compression originel et des informations de mode prédictif récupérées, ainsi que la compression du bloc d'image décompressé dans la trame vidéo clé en fonction du protocole de compression cible et des informations de mode prédictif mappées.

3. Transcodeur, comprenant :
un module permettant de décoder un flux binaire d'entrée,
un module permettant de déterminer une partie de flux binaire qui peut être transmise de manière transparente sans être décompressée et re-compressée et une partie de flux binaire qui ne peut pas être transmise de manière transparente dans un flux binaire décodé,
un module permettant de décompresser la partie de flux binaire qui ne peut pas être transmise de manière transparente en fonction d'un protocole de compression originel,
un module permettant de compresser le flux binaire décompressé en fonction d'un protocole de compression cible,
un module permettant de combiner la partie de flux binaire qui peut être transmise de manière transparente et la partie de flux binaire compressé qui ne peut pas être transmise de manière transparente, et
un module permettant de coder le flux binaire combiné afin de générer un flux binaire de sortie,
dans lequel :
après avoir exécuté un décodage de longueur variable sur le flux binaire d'entrée, le transcodeur détermine en outre si le protocole de compression originel du flux binaire est identique au protocole de compression cible du flux binaire,
si le protocole de compression originel est identique au protocole de compression cible, le décodeur détermine la partie de flux binaire qui contient des blocs d'image unitaire dont les débits binaires sont inférieurs à un seuil comme étant la partie de flux binaire qui peut être transmise de manière transparente, et il détermine la partie de flux binaire qui contient des blocs d'image unitaire dont les débits binaires ne sont pas inférieurs au seuil comme étant la partie de flux binaire qui ne peut pas être transmise de manière transparente, et
si le protocole de compression originel est différent du protocole de compression cible, le transcodeur détermine en outre si le rendement de compression du protocole de compression originel est inférieur à celui du protocole de compression cible, et si le rendement de compression du protocole de compression originel est inférieur à celui du protocole de compression cible, le transcodeur calcule un rapport du débit binaire de chaque bloc d'image unitaire sur un débit binaire cible, il détermine la partie de flux binaire qui contient des blocs d'image unitaire dont les rapports sont inférieurs à un seuil comme étant la partie de flux binaire qui peut être transmise de manière transparente, et il détermine la partie de flux binaire qui contient des blocs d'image unitaire dont les rapports ne sont pas inférieurs au seuil comme étant la partie de flux binaire qui ne peut pas être transmise de manière transparente.

4. Transcodeur selon la revendication 3, dans lequel :
lors du traitement de la partie de flux binaire qui ne peut pas être transmise de manière transparente, si un bloc d'image dans une trame vidéo clé dans le flux binaire contient des informations de mode prédictif, le transcodeur récupère les informations de mode prédictif, mappe les informations de mode prédictif en fonction du protocole de compression cible, décompresse le bloc d'image dans la trame vidéo clé en fonction du protocole de compression originel et des informations de mode prédictif récupérées, et il compresse le bloc d'image décompressé dans la trame vidéo clé en fonction du protocole de compression cible et des informations de mode prédictif mappées.
